# EUROPÄISCHE PATENTSCHRIFT

(11) **EP 3 615 888 B1**
(45) Veröffentlichungstag und Bekanntmachung des Hinweises auf die Patenterteilung: **29.12.2021**
(21) Anmeldenummer: 18718175.5
(22) Anmeldetag: 25.04.2018
(51) Int. Cl.: G01C 15/06, G01C 15/00, B23B 49/00, B25H 1/00

(54) **2D POSITIONS-MESSSYSTEM, BASIEREND AUF DEM TRACKING VON AKTIVEN ZIELEN**
2D POSITION MEASURING SYSTEM BASED ON THE TRACKING OF ACTIVE TARGETS
POSITIONNEMENT 2D D'UN SYSTÈME DE MESURE BASÉ SUR LE SUIVI DE CIBLES ACTIVES

(30) Priorität: 25.04.2017 EP 17167995
(43) Veröffentlichungstag der Anmeldung: 04.03.2020
(73) Patentinhaber: Hilti Aktiengesellschaft, 9494 Schaan (LI)
(72) Erfinder: SCHMIDT, Peer, 88131 Lindau (DE); BRALLA, Dario, 9470 Buchs (CH)
(74) Vertreter: Hilti Aktiengesellschaft Corporate Intellectual Property
(86) Internationale Anmeldenummer: PCT/EP2018/060644
(87) Internationale Veröffentlichungsnummer: WO 2018/197588

(56) Entgegenhaltungen:
- DE-A1-102010 043 359

## Beschreibung

### GEBIET DER ERFINDUNG

Die vorliegende Erfindung betrifft ein Steuerungsverfahren für ein Vermessungssystem.

Aus der DE 10 2010 043 359 A1 ist ein Lichtstrahlempfänger mit Sprachausgabe bekannt. Aus der Druckschrift ist ferner ein Bedienelement bekannt, das einem Benutzer zum Steuern eines Lichtstrahlerzeugers dient. Unter anderem kann mittels des Bedienelements der Lichtstrahlerzeuger an- und ausgeschaltet und die Intensität einer durch ein Lichtstrahlmarkierungselement erzeugten Lichtstrahlmarkierung erhöht und erniedrigt werden.

### OFFENBARUNG DER ERFINDUNG

Das erfindungsgemäße Steuerungsverfahren ist für ein Vermessungssystem mit einem Peilstab und einer Basisstation vorgesehen. Das Steuerungsverfahren beinhaltet folgende Schritte: Emittieren eines Lichtstrahls durch eine Lichtquelle in der Basisstation; Drehen einer Emissionsrichtung des Lichtstrahls um eine Achse durch eine drehbare Optik der Basisstation; Erfassen einer Abweichung eines Auftreffpunkts des Lichtstrahls auf einen ortsauflösenden Lichtsensor des Peilstabs; Ermitteln eines Distanzvektors des Auftreffpunkts zu einem Referenzpunkt auf dem Peilstab durch eine Auswertungseinheit des Peilstabs; Ausrichten der Emissionsrichtung durch Ansteuern der drehbaren Optik der Basisstation mittels auf dem Distanzvektor basierenden ersten Steuerbefehlen bis der Auftreffpunkt auf dem Referenzpunkt ruht; Bestätigen der Positionierung des Peilstabs auf einem Vermessungspunkts durch einen Anwender durch Betätigen eines Bedienelements des Peilstabs, wobei das Bedienelement eine Routine des Peilstabs aktiviert, welche den Lichtstrahl der Basisstation auf den Referenzpunkt ausrichtet; Bestimmen der Emissionsrichtung des Lichtstrahls mit einem Winkelencoder in der Basisstation , wobei das Bestimmen der Emissionsrichtung solange verzögert wird, bis der Auftreffpunkt auf dem Referenzpunkt ruht und Aufzeichnen der bestimmten Emissionsrichtung zugehörig zu dem Vermessungspunkt durch eine Protokolleinrichtung.

Vereinfacht beruht das Verfahren auf einem anfänglichen Suchen des Peilstabs bis dieser von dem kreisenden Lichtstrahl getroffen wird. Der Peilstab weist daraufhin die Basisstation ein, so dass der Lichtstrahl bewegungslos auf den Referenzpunkt des Peilstabs trifft. Der Anwender kann den Peilstab auf einem gewünschten Vermessungspunkt positionieren. Der Anwender bestätigt die korrekte Positionierung, worauf die Basisstation die Emissionsrichtung mit einem integrierten Winkelencoder vermisst. Die Bestätigung der korrekten Positionierung kann erfolgen, bevor der Peilstab ruhig steht oder die Basisstation den Lichtstrahl auf den Referenzpunkt ausgerichtet hat. In dem Fall wird die Vermessung noch nicht ausgelöst. Die Vermessung wird erst ausgelöst, wenn der Peilstab den Lichtstrahl auf dem Referenzpunkt erfasst und keine relative Bewegung des Lichtstrahls erfasst. Messfehler durch einen wackelnden Peilstab oder verfrühtes Auslösen können so ausgeschlossen werden. Ferner ist nur das Ereignis "Strahl ruht" entscheidend für die Vermessung der Emissionsrichtung. Eine Synchronisation eines Ereignisses in der Basisstation und eines Ereignisses in dem Peilstab entfällt und damit die Notwendigkeit präzise synchronisierter Uhren.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: ein Vermessungssystem in einer Seitenansicht
- Fig. 2: das Vermessungssystem in einer Draufsicht
- Fig. 3: eine Auswertungseinheit
- Fig. 4: eine Handwerkzeugmaschine

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

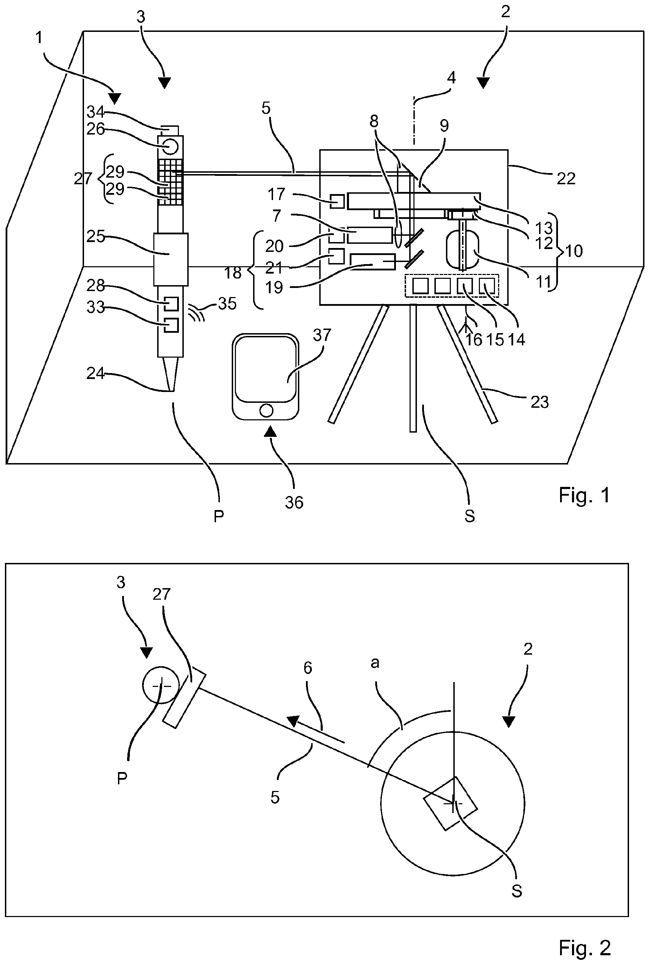

Fig. 1 und Fig. 2 zeigen schematisch ein Vermessungssystem **1** in einem Raum. Das Vermessungssystem **1** beinhaltet eine Basisstation **2** und einen Peilstab **3**. Die Basisstation **2** stellt der Anwender an einem Standort **S** in dem Raum auf. Der Peilstab **3** wird an zu vermessenden Vermessungspunkten **P** in dem Raum positioniert und der Anwender bestätigt das Positionieren. Das Vermessungssystem **1** bestimmt die relative Position des Peilstabs **3** zu der Basisstation **2** und ermittelt daraus Koordinaten der Vermessungspunkte **P**. Die nachfolgenden Ausführungen erläutern eine Bestimmung der Koordinaten in einer horizontalen Ebene. Analog können mit dem Vermessungssystem **1** auch Koordinaten in einer vertikalen Ebene bestimmt werden, und sei dies durch Kippen der Anordnung um 90 Grad. Die Koordinaten der Vermessungspunkte **P** werden in einem lokalen Koordinatensystem des Vermessungssystems **1** erfasst. Das beispielhafte lokale Koordinatensystem nutzt zylindrische Koordinaten. Der Ursprung des lokalen Koordinatensystems fällt mit einer vertikalen Achse **4** der Basisstation **2** zusammen; ein Azimut **a** (Horizontalwinkel) gibt den Winkel im Urzeigersinn bezüglich der Himmelsrichtung nach Norden an. Alternative Koordinatensysteme, z.B. kartesische Koordinaten; andere Festlegung des Ursprungs, z.B. in eine vertikale Achse des Peilstabs **3**, können verwendet werden. Unter Kenntnis der Koordinaten und Orientierung des Standorts **S** in einem Referenzsystem können die lokalen Koordinaten in Koordinaten des Referenzsystems transformiert werden.

Die Basisstation **2** emittiert einen einzelnen Lichtstrahl **5** in den Raum. Dem Ausführungsbeispiel gemäß liegt die Emissionsrichtung **6** des Lichtstrahls **5** in der horizontalen Ebene. Eine Emissionsrichtung **6** des Lichtstrahls **5** geht von der vertikalen Achse **4** aus, d.h. gemäß dem oben gewählten Koordinatensystem ist die Emissionsrichtung **6** durch den Azimut a bestimmt. Die Basisstation **2** kann die Emissionsrichtung **6**, d.h. den Azimut **a,** kontinuierlich oder schrittweise ändern. Bei der beispielhaften Basisstation **2** kann der Azimut **a** auf jeden Winkel des Vollkreises eingestellt werden. Der Azimut **a** kann auch auf einen auf einen Sektor des Vollkreises beschränkt sein.

Eine Lichtquelle **7** der Basisstation **2** erzeugt den Lichtstrahl **5**. Die Lichtquelle **7** ist vorzugsweise eine Laserlichtquelle, z.B. eine Laserdiode. Der Lichtstrahl **5** kann mittels einer Strahlformungsoptik aus ein oder mehreren optischen Elementen, z.B. Linsen, Blenden, geformt und kollimiert werden.

Eine Optik **8** gibt die Emissionsrichtung **6** des Lichtstrahls **5** vor. Wenigstens ein optisches Element der Optik **8** ist beweglich, um die Emissionsrichtung **6** zu verändern. Bei dem illustrierten Aufbau führt die Optik **8** den Lichtstrahl **5** entlang der vertikalen Achse **4** oder nahezu entlang der vertikalen Achse **4**. Ein Prisma **9** ist auf der Achse **4** angeordnet. Eine zu der Achse **4** geneigte und reflektierende Facette lenkt den Lichtstrahl **5** aus der vertikalen Achse **4** in die horizontale Ebene. Das Prisma **9** ist um die vertikale Achse **4** drehbar gelagert. Die geneigte Facette weist entsprechend der Drehstellung des Prismas **9** in verschiedene Emissionsrichtungen, wodurch in Folge der Lichtstrahl **5** in die verschiedenen Emissionsrichtung **6** abgelenkt wird. Anstelle eines Prismas **9** können andere vollständig oder teilweise reflektierende optische Elemente wie Spiegel, Gitter, etc. verwendet werden. Das bewegte optische Element kann das letzte von dem Lichtstrahl **5** durchlaufene optische Element sein, welches Einfluss auf die Strahlführung nimmt. In anderen Ausführungsformen können mehrere optische Elemente bewegt, unter Anderem kann der gesamte optische Aufbau einschließlich der Lichtquelle **7** um die Achse **4** drehbar sein.

Die Basisstation **2** hat einen Antrieb **10**, welcher das Prisma **9** oder ggf. die weiteren optischen Elemente um die Achse **4** drehend antreibt. Eine beispielhafter Antrieb **10** basiert auf einem herkömmlichen Elektromotor **11**. Der Elektromotor **11** treibt über ein Feingetriebe **12** einen Drehteller **13** an. Das Prisma **9** ist auf dem Drehteller **13** angeordnet. Der illustrierte mechanische Aufbau ist nur beispielhaft. Dem Fachmann sind weitere Konstruktionen bekannt, um ein optisches Element mit hoher Präzision durch einen Elektromotor zu bewegen. Anstelle einer kontinuierlichen Rotation um die vertikale Achse **4** kann das Prisma **9** periodisch vor- und zurückkippenden angeordnet sein. Beispielsweise kann das Prisma **9** auf einer über einen Exzenter angetriebenen Wippe angeordnet sein. Ferner kann das bewegte optische Element durch einen Mikrospiegelaktor realisiert sein.

Eine Basissteuerung **14** (Steuerung auf der Basisstation **2**) kontrolliert die Bewegung des Antriebs **10**. Die Basissteuerung **14** kann die Drehgeschwindigkeit des Antriebs **10** und damit des Prismas **9** vorgeben. Zumindest kann die Basissteuerung **14** die Drehgeschwindigkeit zwischen Null und einer vorgegebenen Drehgeschwindigkeit variieren. Vorzugsweise kann die Basissteuerung **14** die Drehgeschwindigkeit in mehreren Stufen oder kontinuierlich zwischen Null und einer maximalen Drehgeschwindigkeit einstellen. Die Basissteuerung **14** kann beispielsweise auch eine Drehrichtung vorgeben und diese zwischen einem Linkslauf und einem Rechtslauf umschalten.

Die Basissteuerung **14** enthält eine Kommunikationsschnittstelle **15**, über welche die Basissteuerung **14** Steuerungsbefehle empfangen kann. Die Steuerungsbefehle können den Antrieb **10** ein- und ausschalten, ggf. die Drehrichtung und/oder Drehgeschwindigkeit festlegen. Die Kommunikationsschnittstelle **15** ist drahtlos, vorzugsweise eine kurzreichweitige, funkbasierte Schnittstelle alternative eine optische Schnittstelle. Die funkbasierte Schnittstelle enthält eine Antenne **16 ü**ber welche die die Steuerungsbefehle enthaltenen Funkwellen empfangen werden. Die verwendeten Trägerfrequenzen und Übertragungsprotokolle können einem der üblichen Standards entsprechen, z.B. dem ISM-Band und Bluetooth.

Die Basisstation **2** hat einen Winkelencoder **17** zum Ermitteln der aktuellen Emissionsrichtung **6**. Der Winkelencoder **17** kann in unterschiedlichen Bauformen umgesetzt sein. Beispielsweise ist der Drehteller **13** mit umlaufenden Markierungen versehen, welche von einem Sensor abgetastet werden. Die Markierungen können Striche, Kerben, magnetische Markierungen, etc. sein, der Sensor ist entsprechend ein optischer, magnetischer oder anderweitiger Sensor. Der Azimut **a** kann unmittelbar in den Markierungen kodiert sein oder der Winkelencoder **17** ermittelt über die Anzahl an dem Sensor vorbeibewegten Markierungen den aktuellen Azimut **a**. Der Winkelencoder **17** kann ferner in dem Antrieb **10** angeordnet sein. Insbesondere kann die Drehstellung des Elektromotors, z.B. eines bürstenlosen Elektromotors, abgetastet sein. Die Basissteuerung **14** empfängt den von dem Winkelencoder **17** ermittelten Azimut **a**.

Die Basisstation **2** enthält einen optischen Distanzmesser **18**. Der optische Distanzmesser **18** basiert auf einem Lichtdetektor **19**, welcher von einem Objekt rückreflektierte Anteile des Lichtstrahls **5** erfasst. Die reflektierten Anteile verlaufen antiparallel zu der Emissionsrichtung **6** und können durch das Prisma **9** in die Optik **8** zurückgeführt werden. Ein Strahlteiler lenkt die Anteile auf den Lichtdetektor **19**. Der Lichtdetektor **19** ermittelt die Laufzeit von dem Aussenden des Lichtstrahls **5** in die Emissionsrichtung **6** bis zum Eintreffen auf dem Lichtdetektor **19**. Die Laufzeit ist ein Maß für die Distanz zu dem Objekt in der Emissionsrichtung **6**. Für die Bestimmung der Laufzeit kann der Lichtstrahl **5** beispielsweise gepulst werden. Die Intensität des Lichtstrahls **5** wird durch ein Modulator **20** moduliert. Der Modulator **20** ist mit einem Zeitnehmer **21** synchronisiert. Der Zeitnehmer **21** ermittelt die Laufzeit zwischen dem Zeitpunkt des Einprägens einer Modulation in den Lichtstrahl **5** und dem Erfassen dieser Modulation durch den Lichtdetektor **19**. Die Modulation kann ein einfaches Ein- und Ausschalten des Lichtstrahls **5** beinhalten. Vorzugsweise wird der Intensität ein Muster mit mehreren Helligkeitsstufen aufgeprägt. Der Modulator **20** kann durch eine Modulation des Versorgungsstroms der Lichtquelle **7** erfolgen. Ergänzend oder alternativ kann die Intensität mittels elektrooptischen oder akustooptischen Modulatoren verändert werden.

Eine Messung des optischen Distanzmessers **18** kann durch die Basissteuerung **14** mittels eines Steuersignals oder eines Steuerbefehls veranlasst werden. Der optische Distanzmesser **18** führt eine Messung durch und übergibt den Messwert an die Basissteuerung **14**. Der optische Distanzmesser **18** kann sich danach selbsttätig deaktivieren. In einer Ausführung kann die Basisstation **2** den Distanzmesser **18** deaktivieren. In einem deaktivierten Zustand ist vorzugsweise der Modulator **20** deaktiviert. Der Lichtstrahl **5** hat bei einem deaktivierten oder inaktiven Distanzmesser **18** eine konstante Intensität.

Die Lichtquelle **7** und die Optik **8** sind in einem schützenden Gehäuse **22** der Basisstation **2** angeordnet. Das Gehäuse **22** kann pendelnd an einem Ständer **23** aufgehängt sein, wodurch die Optik **8** entlang der Schwerkraft ausrichtet ist. Die Emissionsrichtung **6** ist hierdurch in einem gewissen Umfang unabhängig von der Aufstellung der Basisstation **2** horizontal, d.h. senkrecht zu der Schwerkraft. Der Ständer **23** kann drei telekopierbare Beine aufweisen, welche eine kippfreie und stabile Aufstellung. Mittels der teleskopierbaren Beine kann die Höhe des Gehäuses **22** und damit die Ebene der Emissionsrichtung **6** eingestellt werden.

Der Peilstab **3** hat eine Spitze **24**, welche auf dem Vermessungspunkt **P** positioniert wird. Der beispielhafte Peilstab **3** ist im Gegensatz zu der Basisstation **2** nicht freistehend, sondern muss durch den Anwender an einem Griff **25** während einer Messung gehalten werden. Der Peilstab **3** kann eine Libelle **26** oder ähnliche Messeinrichtung aufweisen, welche dem Anwender unterstützt, den Peilstab **3** vertikal ausgerichtet zu halten.

Der Lichtstrahl **5** der Basisstation **2** kann an einem (Auftreff-) Punkt **T** auf den Peilstab **3** fallen. Ob der Lichtstrahl **5** auf den Peilstab **3** fällt hängt von dem Vermessungspunkt **P** und der aktuellen Emissionsrichtung **6** des Lichtstrahls **5** ab. Die Basisstation **2** lässt den Lichtstrahl **5** in der Ebene kreisen.

Der Peilstab **3** hat einen ortsauflösenden Lichtsensor **27**. Der Lichtsensor **27** erfasst ob, und ggf. wo der Lichtstrahl **5** der Basisstation **2** auf den Peilstab **3** fällt. Der (Auftreff-) Punkt **T**, an dem der Lichtstrahl **5** auf den Lichtsensor **27** fällt, hängt von dem Vermessungspunkt **P** und der Emissionsrichtung **6** des Lichtstrahls **5** ab. In einem Basismodus dreht die Basisstation **2** den Lichtstrahl **5** kontinuierlich um die vertikale Achse **4**. Der ortsauflösende Lichtsensor **27** wird entsprechend wiederholt getroffen. Der Anwender hat Sorge zu tragen, dass kein Hindernis zwischen der Basisstation **2** und dem Lichtsensor **27** liegt und der Lichtsensor **27** auf der Höhe der Emissionsrichtung **6** liegt.

In der Ausführungsform hat der Lichtsensor **27** zumindest in der horizontalen Richtung eine Ortsauflösung. Der Peilstab **3** hat einen Referenzpunkt **R**, beispielsweise eine Mitte des Lichtsensors **27**. Vorzugsweise liegt der Referenzpunkt **R** auf dem Lot durch die Spitze **24**. Eine Auswertungseinheit **28** ermittelt einen Distanzvektor zwischen dem Referenzpunkt **R** und dem Auftreffpunkt **T** des Lichtstrahls **5**. Der Distanzvektor kann in einer sehr einfachen Variante angeben, ob der Lichtstrahl **5** auf den Referenzpunkt **R**, links versetzt zu dem Referenzpunkt **R** oder rechts versetzt zu dem Referenzpunkt **R** auf den Lichtsensor **27** fällt. Der Distanzvektor kann auch ein Längenmass für den Abstand des Auftreffpunkts **T** zu dem Referenzpunkt **R** enthalten. Ferner kann der Distanzvektor auch ein Mass für die Geschwindigkeit enthalten, mit welchem der Lichtpunkt über den Lichtsensor **27** streicht.

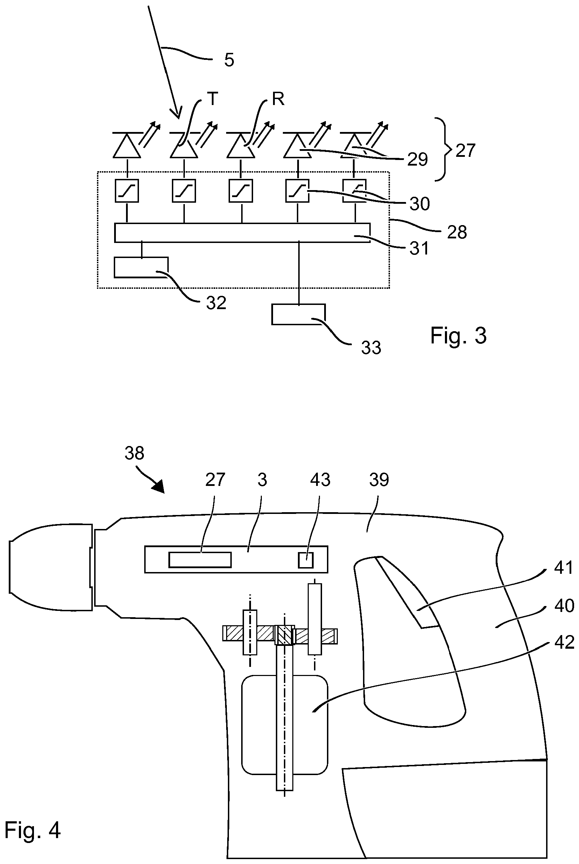

Der Lichtsensor **27** kann durch mehrere lichtemittierende Halbleiterbauelemente (LED) gebildet sein (Fig.3). Die LEDs **29** sind in der horizontalen Ebene nebeneinander angeordnet. Eine mittlere der LEDs **29** ist beispielsweise der Referenzpunkt **R**. Auch wenn eine LED **29** nicht für die Konversion von Licht in Elektrizität optimiert ist, erzeugt eine LED **29** eine Spannungsänderung beim Einfall des Lichtstrahls **5** von der Basisstation **2**. Den LEDs **29** sind Komparatoren **30** nachgeschaltet, um die Spannungsänderung zu detektieren. Jeder LED **29** kann ein Komparator **30** zugeordnet sein, alternativ können mittels eines Multiplexers die LED **29** in Gruppen zusammengefasst und zeitlich versetzt auf eine Spannungsänderung geprüft werden. Der Komparator **30** kann beispielsweise durch einen analogen Schwellwert-Komparator oder einer digitalen Verarbeitung in einem Prozessor **31** mit vorgeschaltetem Analog-Digital-Wandler realisiert sein.

Die Auswertungseinheit **28** kann auf einer Verschaltung der LEDs **29** oder der Komparatoren **30** basieren. Das Signal des Komparators an der Referenz LED ergibt ein "ausgerichtet" Signal. Die Signale der Komparatoren **30** links von der Referenz LED können zu einem "links" Signal gebündelt werden; die Signale der Komparatoren **30** rechts von der Referenz LED können zu einem "rechts" Signal gebündelt werden. In einer Weiterbildung kann die Auswertungseinheit **28** den Abstand der Lichtstrahls **5** von dem Referenzpunkt **R** ermitteln. Die Auswertungseinheit **28** kann durch diskrete Bauelemente, einen integrierten Schaltkreis oder einen in einem Prozessor **31** ablaufenden Prozess realisiert sein. Zu den Signalen sind entsprechende Steuerbefehle in einem Speicher **32** der Auswertungseinheit **28** hinterlegt. Die Steuerbefehle entsprechen den Steuerbefehlen der Basissteuerung **14** in der Basisstation **2**. Der Peilstab **3** hat eine drahtlose Kommunikationsschnittstelle **33**, welche mit der Kommunikationsschnittstelle **15** der Basisstation **2** kommuniziert. Der Peilstab **3** kann über die Kommunikationsschnittstelle **15** die Steuersignale übermitteln und darüber mittelbar den Antrieb **10** der Basisstation **2** steuern.

Der Peilstab **3** hat ein Bedienelement **34**, im einfachsten Fall einen Taster. Mit dem Betätigen des Bedienelements bestätigt der Anwender, dass der Peilstab **3** an dem vorgesehenen Vermessungspunkt **P** aufgestellt ist. Das Bedienelement **34** aktiviert eine Routine des Peilstabs **3**, welche den Lichtstrahl **5** der Basisstation **2** auf den Referenzpunkt R ausrichtet. Die Routine kann durch einen Prozessor **31** ausgeführt werden.

Die Routine kann bei einem erstmaligen Aufruf einen Basismodus der Basisstation **2** ausführen. Der Basisstation **2** wird ein Steuersignal zum Einschalten der Lichtquelle **7** übermittelt. Ein Steuersignal **35** zum Drehen der Emissionsrichtung **6** wird übermittelt. Eine Drehrichtung ist beliebig. Beispielsweise wird ein Drehen nach links veranlasst. Sofern die Basisstation **2** unterschiedliche Drehgeschwindigkeiten der Emissionsrichtung **6** ermöglicht, wird ein Steuersignal **35** zum Setzen auf die höchste oder eine hohe Drehgeschwindigkeit von dem Peilstab **3** übermittelt. Der Lichtstrahl **5** kreist mit hoher Geschwindigkeit und zeichnet eine horizontale Linie auf die Wände. In regelmäßigen Intervallen überstreicht der Lichtstrahl **5** dabei den Peilstab **3**.

Die Routine wartet auf ein Auftreffen des Lichtstrahls **5** auf den ortsauflösenden Lichtsensor **27**. Sobald der Lichtstrahl **5** erfasst wird, übermittelt der Peilstab **3** vorzugsweise einen Steuerbefehl zum Verringern der Drehgeschwindigkeit. Aufgrund der Trägheit der Basisstation **2** kann der Lichtstrahl **5** bereits den Referenzpunkt **R** passiert haben. In diesem Fall wird ein Steuerbefehl zum Umkehren der Drehrichtung an die Basisstation **2** übermittelt. Falls in den verfügbaren Steuerbefehlen vorhanden, kann der Peilstab **3** einfach einen Steuerbefehl "Drehrichtung umkehren" übermitteln. Andernfalls ermittelt der Peilstab **3** die Bewegungsrichtung des Lichtstrahls **5**. Bei einer Bewegungsrichtung von links nach rechts, zeigen zuerst die LEDs links von dem Referenzpunkt **R** ein Signal und danach die LEDs rechts von dem Referenzpunkt **R**. Die Auswertungseinheit **28** kann aus der Abfolge auf welche der Bereiche des Lichtsensors **27** der Lichtstrahl **5** nacheinander fällt die Bewegungsrichtung bestimmen. Die Auswertungseinheit **28** gibt darauf einen Steuerbefehl mit einer Richtung gegenläufig zu der bestimmten Bewegungsrichtung aus. Wenn der Lichtstrahl **5** auf den Referenzpunkt **R** fällt, wird ein "Stop" Steuerbefehl übermittelt, um die Drehbewegung der Emissionsrichtung **6** zu stoppen. Der Peilstab **3** kann eine Verzögerung schätzen, welche zwischen einer Ausgabe des "Stop" Steuersignals und dem tatsächlichen Ruhen der Emissionsrichtung **6** vergeht. Der Peilstab **3** übermittelt entsprechend der geschätzten oder hinterlegten Verzögerung das "Stop" Steuersignal vor Erreichen des Referenzpunkts an die Basisstation **2**. Falls der Lichtstrahl **5** nach einem "Stop" Steuersignal rechts von dem Referenzpunkt **R** zu ruhen kommt, gibt der Peilstab **3** einen Steuerbefehl zum Drehen der Emissionsrichtung **6** nach links aus, d.h. zu dem Referenzpunkt **R** hin. Analog gibt der Peilstab **3** einen Steuerbefehl zum Drehen der Emissionsrichtung **6** nach rechts aus, wenn der Lichtpunkt links von dem Referenzpunkt **R** stehen bleibt. Die Emissionsrichtung **6** kann mehrfach angepasst werden, bis der Lichtstrahl **5** auf dem Referenzpunkt **R** zum Ruhen kommt. Zur Ruhe kommen bedeutet sowohl, dass der Auftreffpunkt **T** und Referenzpunkt **R** zusammenfallen und dass keine Relativbewegung des Lichtstrahls gegenüber dem Peilstab **3** erfasst wird. Der Peilstab **3** übermittelt den "ausgerichtet" Steuerbefehl an die Basisstation **2**. Die Basisstation **2** kann nun den Antrieb **10** der Optik **8** deaktivieren. Falls der Anwender den Peilstab **3** bewegt, verschiebt sich der Auftreffpunkt **T** wieder. Die beschriebene Routine wird vorzugsweise automatisch erneut aktiviert.

Der Peilstab **3** kann die jeweilige LED **29** aufleuchten lassen, auf welche der Lichtstrahl **5** gerade fällt. Der Anwender erhält eine unmittelbare Rückmeldung über das Ausrichten des Lichtstrahls **5**. Dies ist insbesondere gegenüber klassischen ortsauflösenden Photodetektoren vorteilhaft, auf welchen der Lichtstrahl **5** kaum zu erkennen ist.

Der Anwender kann durch Betätigen beispielsweise des Bedienelements **34** eine Vermessung der Emissionsrichtung **6** durch die Basisstation **2** anfordern. Die Basisstation **2** ermittelt die Emissionsrichtung **6** mittels des integrierten Winkelencoders **17**. Die Vermessung muss allerdings durch den Peilstab **3** freigeben werden. Das Vermessen ist gesperrt, wenn der Lichtstrahl **5** den Referenzpunkt **R** nicht trifft oder die Optik **8** noch bewegt wird. Andernfalls, wenn der Referenzpunkt **R** getroffen und die Optik **8** unbewegt ist, wird die Vermessung freigegeben. Hat der Anwender vor der Freigabe die Positionierung des Peilstabs **3** auf dem Vermessungspunkt **P** bestätigt, wird mit der Freigabe automatisch das Vermessen ausgelöst. Der Anwender muss nicht erneut die Positionierung bestätigen.

Der Peilstab **3** kann eine Distanzmessung durch die Basisstation **2** anfragen, indem ein entsprechender Steuerbefehl übermittelt wird. Die Basisstation **2** kann den Antrieb **10** für die Dauer der Distanzmessung deaktivieren. Der Distanzmesser **18** wird eingeschaltet. Die Distanzmessung ermittelt die Distanz zwischen dem Peilstab **3** und der Basisstation **2**. Die Distanz kann dem Peilstab **3** automatisch übermittelt werden, oder der Peilstab **3** kann die Distanz mittels eines Steuerbefehls abfragen. Die Distanzmessung benötigt analog der Vermessung der Emissionsrichtung **6** eine Freigabe durch den Peilstab **3**.

Die Emissionsrichtung **6** und die Distanz legen die Koordinaten des Vermessungspunkts **P** in dem Raum gegenüber der Basisstation **2** fest. Die Koordinaten können in einer Protokolleinrichtung **36** des Peilstabs **3** abgelegt werden. Die Vermessungspunkte **P** können chronologisch ihrer Aufzeichnung entsprechend in der Protokolleinrichtung **36** abgelegt werden. Ferner kann eine Eingabeeinrichtung, z.B. Tastatur, vorgesehen sein, welche dem Anwender ermöglichen Textinformationen zu den Koordinaten des Vermessungspunkts **P** abzulegen.

Die Protokolleinrichtung **36** kann in dem Peilstab **3**, der Basisstation **2** oder einer externen Einheit, z.B. einem Smartphone oder ähnlichem Mobilgerät, realisiert sein. Das Smartphone hat eine standardisierte drahtlose Schnittstelle, z.B. Bluetooth, welche einen Datenaustausch mit dem Peilstab **3** ermöglicht. Der Peilstab **3** kann die Daten an eine auf dem Smartphone laufende Applikation übermitteln. Die Applikation kann dem Anwender auf einem Display **37** einen nächsten Vermessungspunkt **P** anzeigen. Das Display kann auch an dem Peilstab 3 angeordnet sein. Der Anwender wählt den Vermessungspunkt **P** in der Applikation aus und startet eine Vermessung des Vermessungspunkts **P** mit dem Peilstab **3**, wie zuvor beschrieben. Die Vermessung wird anschließend von dem Peilstab **3** von der Applikation dem ausgewählten Vermessungspunkt **P** zugeordnet.

Eine Kalibrierungsroutine für die Basisstation **2** nutzt ein oder mehrere Vermessungspunkte **P**, um die Koordinaten und Orientierung des Standorts **S** in einem Referenzsystem zu bestimmen. Zu wenigstens zwei Vermessungspunkten **P** sind die Koordinaten in dem Referenzsystem bekannt. Beispielsweise sind die Vermessungspunkte **P** geographische Landmarken oder seitens eines Bauplans vorgegebene Landmarken. Die Koordinaten der Vermessungspunkte **P** können wie zuvor in dem lokalen Koordinatensystem der Basisstation **2** bestimmt werden. Hierbei kann eine Bestimmung des Emissionsrichtung **6** ausreichend sein, eine Bestimmung der Distanz zwischen der Basisstation **2** und dem Peilstab **3** auf dem Vermessungspunkt **P** kann unterstützend ermittelt werden. Eine Transformationsmatrix für die lokalen Koordinaten in Koordinaten des Referenzsystems kann durch den Vergleich der Koordinaten der Vermessungspunkte **P** in den beiden Koordinatensystemen ermittelt werden. Die Transformationsmatrix kann auf die lokalen Koordinaten des Standorts **S** angewandt werden, um den Standort **S** und Orientierung der Basisstation **2** in den Koordinaten des Referenzsystems zu erhalten. Die Transformationsmatrix oder die dafür relevanten Daten können z.B. von dem Peilstab **3**, an die Basisstation **2** übermitteln werden, damit die Basisstation **2** nachfolgende Messungen in dem Referenzsystem ermittelt, d.h. das lokale Koordinatensystem auf das Referenzsystem abbildet.

Der Anwender kann für die Kalibrierungsroutine mittels des Displays **37** unterstützt werden. Ansprechend auf ein Auswählen der Kalibrierungsroutine mit dem Bedienelement **34**, werden auf dem Display **37** Landmarken mit bekannten Koordinaten in einem globalen Koordinatensystem angezeigt. Der Anwender kann eine der Landmarken auswählen. Daraufhin setzt der Anwender den Peilstab **3** an die ausgewählte Landmarke, und bestätigt dies mit einem Tastendruck an dem Bedienelement **34**. Der Peilstab **3** ermittelt wie zuvor beschrieben den Azimut **a** für diese Landmarke. Der Anwender wird angewiesen eine zweite Landmarke auszuwählen. Das Verfahren wird mit der zweiten Landmarke wiederholt. Anschließend bestimmt das Vermessungssystem **1** basierend auf den bestimmten Azimut und den beiden globalen Koordinaten die Koordinaten der Basisstation **2**.

Die LEDs **29** können in vertikaler Richtung über mehrere Zentimeter ausgedehnt sein. Alternativ können mehrere LEDs **29** zu einer vertikalen Spalte zusammengeschaltet sein. Der Peilstab **3** kann dann ohne aufwändige vertikale Ausrichtung den Lichtstrahl **5** erfassen. In weitere Ausgestaltung ist der ortsauflösende Lichtsensor **27** sowohl in horizontaler als auch vertikalen Richtung ortsauflösend. Beispielsweise kann die Auswertungseinheit **28** ermitteln, welche der in einer Spalte vertikal angeordneten LEDs **29** von dem Lichtstrahl **5** getroffen ist. Der vertikale Abstand der jeweiligen LEDs **29** zu der Spitze **24** des Peilstabs **3** sind bekannt. Der vertikale Abstand kann in einem Speicher des Peilstabs **3** hinterlegt sein. Bei einer Vermessung eines Vermessungspunkts **P** kann der vertikale Abstand zusammen mit den horizontalen Koordinaten in der Protokolleinrichtung **36** abgelegt werden.

Der Anwender kann einen Verfolgungsmodus an dem Peilstab **3** auswählen. Das Bedienelement **34** hat eine entsprechende Wahlstellung. Der Peilstab **3** führt das oben genannte Verfahren aus, bis der Lichtstrahl **5** auf den Referenzpunkt **R** ruht. In dem Verfolgungsmodus kann der Anwender den Peilstab **3** nun bewegen. Die Auswertungseinheit **28** erkennt einen zunehmenden Versatz des Auftreffpunkts **T** gegenüber dem Referenzpunkt **R**. Die Auswertungseinheit **28** gibt ein Steuersignal **35** aus, welches übermittelt an die Basisstation **2** die Emissionsrichtung **6** in Richtung zu dem Referenzpunkt **R** korrigiert. Die Basisstation **2** führt in dem Verfolgungsmodus vorzugsweise keine Ermittlung der Emissionsrichtung **6** oder der Distanz zu dem Peilstab **3** durch. Eine Ermittlung der Emissionsrichtung **6** und der Distanz wird vorzugsweise durch erst durch eine Aufforderung des Anwenders ausgelöst, beispielsweise ansprechend auf Betätigen des Bedienelements **34**.

In einer Ausführungsform kann der Peilstab **3** an einer Handwerkzeugmaschine **38** befestigt sein (Fig.4). Die Handwerkzeugmaschine **38** hat ein Gehäuse **39** mit einem Handgriff **40**. Der Anwender kann die Handwerkzeugmaschine **38** mit dem Handgriff **40** führen und im Betrieb halten. Die Handwerkzeugmaschine **38** wird mit einem Haupttaster **41** aktiviert, welcher vorzugsweise an dem Handgriff **40** angeordnet ist. Der Haupttaster **41** startet einen Antrieb **42**, z.B. einen Elektromotor, Verbrennungsmotor, Verbrennungskammer mit Hubzylinder. Typische Handwerkzeugmaschinen **38** sind Elektroschrauber, Kreissägen, Bohrhämmer, Elektromeißel, Setzgeräte, etc.

Der Peilstab **3** an der Handwerkzeugmaschine **38** ermöglicht ein Tracken der Handwerkzeugmaschine **38**. Der Peilstab **3** arbeitet in dem obig beschriebenen Verfolgungsmodus. Ansprechend auf ein aktivierten der Handwerkzeugmaschine **38** veranlasst der Peilstab **3** ein Bestimmen des Azimut **a** und vorzugsweise der Distanz zwischen Peilstab **3** und Basisstation **2**, um die Koordinaten der Handwerkzeugmaschine **38** zu bestimmen. Der Peilstab **3** enthält beispielsweise einen Vibrationssensor **43**, um die Aktivität der Handwerkzeugmaschine **38** basierend auf den Vibrationen zu erkennen. Alternativ kann der Peilstab **3** über eine Kommunikationsschnittstelle **15** die Betätigung des Haupttasters **41** mittgeteilt werden. Ferner kann der Peilstab **3** in der Handwerkzeugmaschine **38** integriert mit der Elektronik der Handwerkzeugmaschine 38 verbunden sein. Die Koordinaten können zusammen mit der Aktivität in der Protokolleinrichtung **36** abgelegt werden.

## Patentansprüche

1. Steuerungsverfahren für ein Vermessungssystem (1) mit einem Peilstab (3) und einer Basisstation (2) mit den Schritten:
Emittieren eines Lichtstrahls (5) durch eine Lichtquelle (7) in der Basisstation (2),
Drehen einer Emissionsrichtung (6) des Lichtstrahls (5) um eine Achse (4) durch eine drehbare Optik (8) der Basisstation (2),
Ausrichten der Emissionsrichtung (6) auf den Peilstab (3) mit den Teilschritten:
Erfassen einer Abweichung eines Auftreffpunkts (T) des Lichtstrahls (5) auf einen ortsauflösenden Lichtsensor (27) des Peilstabs (3); Ermitteln eines Distanzvektors des Auftreffpunkts (T) zu einem Referenzpunkt (R) auf dem Peilstab (3) durch eine Auswertungseinheit (28) des Peilstabs (3); und Ausrichten der Emissionsrichtung (6) durch Ansteuern der drehbaren Optik (8) der Basisstation (2) mittels auf dem Distanzvektor basierenden Steuerbefehlen bis der Auftreffpunkt (T) auf dem Referenzpunkt (R) ruht,
Bestätigen der Positionierung des Peilstabs (3) auf einem Vermessungspunkt (P) durch einen Anwender durch Betätigen eines Bedienelements (34) des Peilstabs (3), wobei das Bedienelement (34) eine Routine des Peilstabs (3) aktiviert, welche den Lichtstrahl (5) der Basisstation (2) auf den Referenzpunkt (R) ausrichtet,
Bestimmen der Emissionsrichtung (6) des Lichtstrahls (5) mit einem Winkelencoder (17) in der Basisstation (2), wobei das Bestimmen der Emissionsrichtung (6) solange verzögert wird, bis der Auftreffpunkt (T) auf dem Referenzpunkt (R) ruht,
Aufzeichnen der bestimmten Emissionsrichtung (6) zugehörig zu dem Vermessungspunkt (P) durch eine Protokolleinrichtung (36).

2. Steuerungsverfahren nach Anspruch 1, **dadurch kennzeichnet, dass** eine Entfernung zwischen der Basisstation (2) und dem Peilstab (3) basierend auf einer Laufzeitmessung mit dem Lichtstrahl (5) bestimmt wird, wobei das Bestimmen solange verzögert wird, bis der Auftreffpunkt (T) auf dem Referenzpunkt (R) ruht.

## Claims

1. Control method for a surveying system (1) with a gauging pole (3) and a base station (2), having the steps of:
emitting a light beam (5) using a light source (7) in the base station (2),
rotating an emission direction (6) of the light beam (5) about an axis (4) using a rotatable optical unit (8) of the base station (2),
aligning the emission direction (6) with the gauging pole (3) including the substeps of:
capturing a deviation of a point of incidence (T) of the light beam (5) on a spatially resolving light sensor (27) of the gauging pole (3); ascertaining a distance vector of the point of incidence (T) with respect to a reference point (R) on the gauging pole (3) using an evaluation unit (28) of the gauging pole (3); and aligning the emission direction (6) by controlling the rotatable optical unit (8) of the base station (2) by means of control commands based on the distance vector until the point of incidence (T) lies stationary on the reference point (R),
confirming the positioning of the gauging pole (3) on a measurement point (P) on the part of a user by operating an operating element (34) of the gauging pole (3), wherein the operating element (34) activates a routine of the gauging pole (3) that aligns the light beam (5) of the base station (2) with the reference point (R),
determining the emission direction (6) of the light beam (5) using an angle encoder (17) in the base station (2), wherein the determination of the emission direction (6) is delayed until the point of incidence (T) lies stationary on the reference point (R),
recording the determined emission direction (6) associated with the measurement point (P) using a protocol device (36).

2. Control method according to Claim 1, **characterized in that** a distance between the base station (2) and the gauging pole (3) is determined based on a time-of-flight measurement with the light beam (5), wherein the determination is delayed until the point of incidence (T) lies stationary on the reference point (R).

## Revendications

1. Procédé de commande pour un système de mesurage (1) doté d'une jauge (3) et d'une station de base (2), comprenant les étapes consistant à :
émettre un faisceau lumineux (5) par une source de lumière (7) dans la station de base (2),
faire pivoter une direction d'émission (6) du faisceau lumineux (5) autour d'un axe (4) par un système optique pivotant (8) de la station de base (2),
orienter la direction d'émission (6) sur la jauge (3) par les sous-étapes consistant à : détecter un écart d'un point d'incidence (T) du faisceau lumineux (5) sur un capteur de lumière à résolution locale (27) de la jauge (3) ; établir un vecteur de distance du point d'incidence (T) par rapport à un point de référence (R) sur la jauge (3) par une unité d'évaluation (28) de la jauge (3) ; et orienter la direction d'émission (6) en pilotant le système optique pivotant (8) de la station de base (2) au moyen d'ordres de commande basés sur le vecteur de distance jusqu'à ce que le point d'incidence (T) se retrouve sur le point de référence (R),
confirmer le positionnement de la jauge (3) sur un point de mesurage (P) par un utilisateur par l'actionnement d'un élément de commande (34) de la jauge (3), l'élément de commande (34) activant une routine de la jauge (3) qui oriente le faisceau lumineux (5) de la station de base (2) sur le point de référence (R),
déterminer la direction d'émission (6) du faisceau lumineux (5) par un codeur angulaire (17) dans la station de base (2), la détermination de la direction d'émission (6) étant retardée jusqu'à ce que le point d'incidence (T) se retrouve sur le point de référence (R),
enregistrer la direction d'émission (6) déterminée en association avec le point de mesurage (P) par un dispositif de protocole (36).

2. Procédé de commande selon la revendication 1, **caractérisé en ce qu'**une distance entre la station de base (2) et la jauge (3) est déterminée sur la base d'une mesure de temps de transit par le faisceau lumineux (5), la détermination étant retardée jusqu'à ce que le point d'incidence (T) se retrouve sur le point de référence (R).
